Europäisches Patentamt

**European Patent Office**

Office européen des brevets

(11) Publication number : **0 409 469 B1**

## EUROPEAN PATENT SPECIFICATION

(45) Date of publication of patent specification :
**10.05.95 Bulletin 95/19**

(51) Int. Cl.⁶ : **G11B 7/09**, G11B 7/13, G11B 7/135

(21) Application number : **90307541.4**

(22) Date of filing : **10.07.90**

(54) **Optical recording and/or reproducing apparatus.**

(30) Priority : **21.07.89 JP 189272/89**

(43) Date of publication of application :
**23.01.91 Bulletin 91/04**

(45) Publication of the grant of the patent :
**10.05.95 Bulletin 95/19**

(84) Designated Contracting States :
**DE FR GB NL**

(56) References cited :
**EP-A- 0 201 603**
**PATENT ABSTRACTS OF JAPAN vol. 10, no. 34 (P-427)(2091) 08 February 1986, & JP-A-60 182523 (NEC HOME ELECTRONICS K.K.) 18 September 1985,**

(73) Proprietor : **SONY CORPORATION**
**7-35 Kitashinagawa 6-chome**
**Shinagawa-ku**
**Tokyo 141 (JP)**

(72) Inventor : **Ohsato, Kiyoshi, c/o Patents Division**
**Sony Corporation,**
**6-7-35 Kitashinagawa**
**Shinagawa-ku, Tokyo 141 (JP)**
Inventor : **Fukumoto, Atsushi, c/o Patents Division**
**Sony Corporation,**
**6-7-35 Kitashinagawa**
**Shinagawa-ku, Tokyo 141 (JP)**

(74) Representative : **Thomas, Christopher Hugo et al**
**D. Young & Co,**
**21 New Fetter Lane**
**London EC4A 1DA (GB)**

Note : Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

This invention relates to optical recording and/or reproducing apparatus. In an optical disc player for recording an information signal on or reproducing an information signal from an optical disc-shaped record medium having a centre hole and a recording area on which a spiral record track is formed surrounding the centre hole, an optical head device is provided for causing a light beam to impinge on the recording area so as to form the spiral record track corresponding to a recording information signal, or to read an information signal recorded in the spiral record track.

In the optical head device, a laser light beam, for example, is collimated by a collimator lens and enters an objective lens to be focused thereby to impinge on the record medium, and then a reflected light beam is directed through the objective lens to a beam splitter to be changed in direction so as to enter a photodetecting portion. A reproduced information signal, a focus error signal and a tracking error signal are produced based on a detection output of the reflected light beam from the photodetecting portion, and a focus servo-control operation to maintain correct focus of the light beam on the record medium, and a tracking servo-control operation to maintain the light beam in correct tracking relation to each turn of the record track are performed in accordance with the focus error signal and the tracking error signal, respectively.

For the production of the tracking error signal, various systems including the so-called "Push-Pull system" have been known. In the Push-Pull system, the reflected light beam from the record medium is detected by a photosensor having a photodetecting element divided into two parts, and the tracking error signal is produced based on a difference in level between detection outputs obtained from two parts of the photodetecting elements, respectively. In the case where the tracking error signal is produced in accordance with the Push-Pull system, although an optical arrangement for obtaining the tracking error signal and an associated signal processing circuit arrangement can be relatively simple, there is the disadvantage that a light spot formed on the photosensor by the reflected light beam from the record medium is undesirably moved regardless of the tracking condition of the light beam impinging on the record medium, and therefore the tracking error signal contains undesirable DC offsets when the record medium is inclined in its radial direction to the optical axis of the objective lens through which the light beam is incident on the record medium.

Accordingly, with the intention of avoiding this disadvantage of the Push-Pull system, there has been proposed an improved Push-Pull system as disclosed in the Japanese laid-open patent specification 61/94246. In this case, at least two light beams which are obtained by dividing a light beam produced by a light beam source are caused to impinge on an optical disc-shaped record medium for forming respective light beam spots thereon with a space therebetween in the radial direction of the record medium, which corresponds to a distance in a predetermined relation to the track pitch of the spiral records track. Then, each of two reflected light beams from the record medium is detected by a respective photosensor having a photodetecting element divided into two parts, and a difference in level between detection outputs obtained respectively from the two parts of one photodetecting element is subjected to level adjustment for compensating a difference in strength between the two reflected light beams and then subtracted from a difference in level between detection outputs obtained respectively from the two parts of the other photodetecting element, thereby to produce the tracking error signal.

The tracking error signal thus obtained is prevented from containing DC offsets, so as properly to represent the tracking condition of the light beam impinging on the record medium, even if it is inclined in its radial direction to the optical axis of the objective lens.

When a light beam from an optical head device is caused to impinge on an optical disc-shaped record medium which is rotating, to form thereon a spiral record track corresponding to a recording information signal or to read an information signal recorded in a spiral record track formed thereon in an optical disc player, it is required for the light beam impinging on the record medium to move an incident position thereof on the record medium in a direction from the outermost fringe portion to the innermost fringe portion, or vice versa. Accordingly, it is usual that the optical head device is moved in the direction from the outermost to the innermost fringe portion, or vice versa, and various head driving mechanisms for moving the optical head device in this way have been proposed.

A head driving mechanism of swing arm type in which a swing arm pivoted at one end is provided for supporting the optical head device attached to the other end, an the optical head device is moved in the direction from the outermost fringe portion of the record medium to the innermost fringe portion, or vice versa, when the swing arm is rotated about its pivoted end, has been known. Such a swing arm type mechanism can be of relatively simple configuration, and can efficiently utilize space in the optical disc player.

With the head driving mechanism of swing arm type, however, a moving locus of the optical head device is on an arc of a circle with the centre disposed at the position of the pivoted end of the swing arm, and it therefore does not extend radially of the record medium. Consequently, when a plurality of light beams are incident on the record medium, the direction of alignment of the light beam spots on the record medium varies in a direction tangential to the spiral record track with the movement of the optical head device. As a result, where the tracking error signal is produced in accordance with the improved Push-Pull system, the direction of alignment of two light beam spots which are formed on the record medium for producing the tracking error signal varies in the direction tangential to the spiral record track with the movement of the optical head device, and this results in the tracking error signal having level variations, irrespective of the tracking condition of the light beam, so hindering correct tracking servo-control operation.

According to the present invention there is provided an optical recording and/or reproducing apparatus comprising:

light beam generating means for producing a main light beam and at least two auxiliary light beams;

photosensing means comprising a first photodetecting element divided into two parts and a second photodetecting element divided into two parts;

optical path forming means for causing the main light beam and two auxiliary light beams to impinge upon an optical disc-shaped record medium and for guiding the main light beam from the record medium to said first photodetecting element and both of two auxiliary light means emanating from the record medium to project substantially coincident on said second photodetecting element, said optical path forming means being arranged to position the main light beam and two auxiliary light beams in such a manner that light beam spots formed on the record medium by two auxiliary light beams are substantially aligned in a radial direction of the record medium and are respectively distant substantially the same distance from a light beam spot formed on the record medium by the main light beam with a space therebetween in the radial direction of the record medium, which corresponds to N/2 (N is a positive integer) times a track pitch on the record medium; and

a signal generating circuit operative to obtain a first difference output corresponding to a difference in level between detection outputs derived respectively from two parts of said first photodetecting element and a second difference output corresponding to a difference in level between detection outputs derived respectively from two parts of said second photodetecting element, and to produce a tracking error signal based on a difference in level between one of said first and second difference outputs and the other of said first and second difference outputs, the other of said first and second difference outputs having been subjected to level adjustment for compensating a difference in intensity between the main light beam and each of two auxiliary light beams.

In an embodiment of optical recording and/or reproducing apparatus in accordance with the present invention, the main light beam is controlled to form the beam spot thereof on the record track provided on the record medium, two auxiliary light beams are controlled to form the respective beam spots on the record medium to be respectively distant substantially the same distance from the beam spot formed by the main light beam, with the space therebetween in the radial direction of the records medium corresponding to N/2 times a track pitch on the record means, and the main light beam and both of two auxiliary light beams reflected from the recorded medium are detected by the first photodetecting elements divided two into parts and the second photodetecting elements divided into two parts, respectively.

Then, the first difference output corresponding to the difference in level between the detection outputs obtained from two parts of the first photodetecting element, which are operative to detect the main light beam from the record medium, and the second difference output corresponding to the difference in level between the detection outputs obtained from two parts of the second photodetecting element, which are operative to detect both of two auxiliary light beams from the record medium, are derived, and the tracking error signal is produced based on the difference in level between one of the first and second difference outputs and the other of the first and second difference outputs after being subjected to level adjustment for compensating the difference in intensity between the main light beam and each of the two auxiliary light beams.

As mentioned above, the second difference output is obtained based on the detection outputs obtained respectively from two parts of the second photodetecting element, by which both of two auxiliary light beams which form the respective beam spots disposed on the record medium to be respectively distant substantially the same distance from the beam spot formed on the record medium by the main beam with the space therebetween in the radial direction of the record medium, which corresponds to N/2 times the track pitch on the record medium, are detected in common, and therefore does not contain components corresponding to movements of each of two auxiliary light beams relative to the record track, which cancel each other, but contains only a DC offset component. Then, the second difference output containing only the DC offset component is subtracted from the first difference output to produce the tracking error signal. Consequently, in the case where an aligning direction of the light beam spots formed by the main light beam and two auxiliary light beams on the record medium is varied to a tangential direction of the record track with the movement of the optical head device, the displacements of each of two auxiliary light beams relative to the record track caused by the variations in this aligning direction are prevented from exerting a deleterious effect on tracking error signal.

The invention will now be described by way of example with reference to the accompanying drawings, throughout which like parts are referred to by like references, and in which:

Figure 1 is a schematic illustration of part of an optical recording and/or reproducing apparatus according to the present invention;

Figure 2 is a schematic illustration of a grating portion in the embodiment of Figure 1;

Figure 3 is a schematic plane view of an optical disc in the embodiment of Figure 1;

Figure 4 is a schematic illustration of light beam spots formed on an optical disc in the embodiment of Figure 1;

Figure 5 is a diagram of a signal generating circuit in the embodiment of Figure 1; and

Figure 6 is a schematic illustration for explaining the operation of the embodiment of Figure 1.

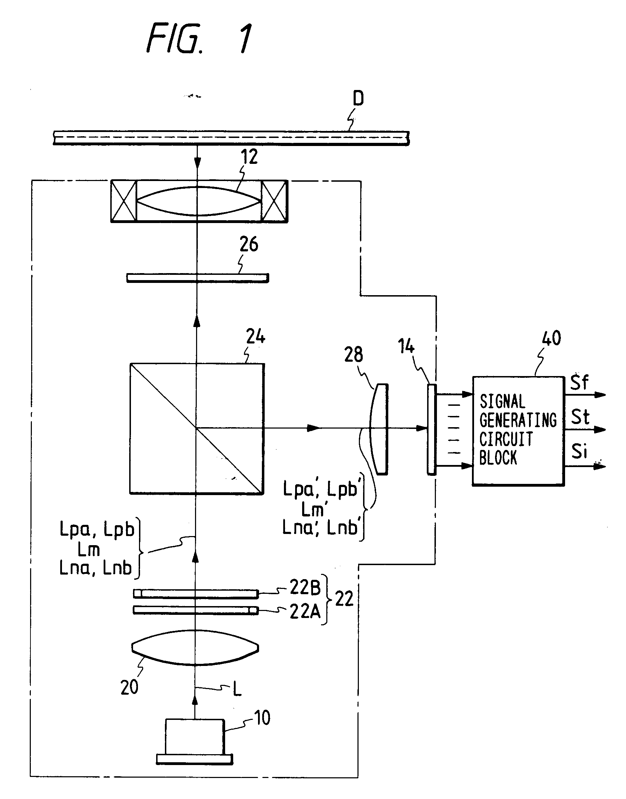

Figure 1 shows an optical unit and a signal generating circuit of an optical recording and/or reproducing apparatus which forms an information reproducing system applied to, for example, an optical disc player. The optical unit comprises a semiconductor laser device laser device 10 for generating a laser light beam L, an objective lens 12 and a photosensor 14, and is able to move in a radial direction of a disc D which is an optical disc-shaped record medium.

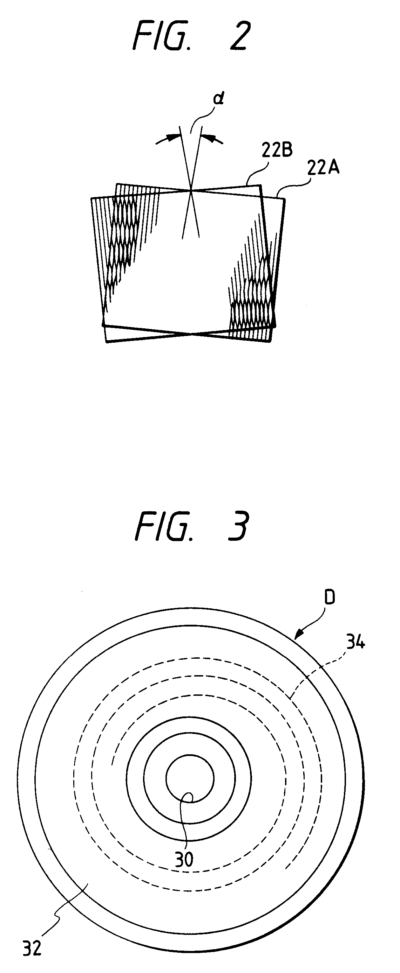

The light beam L is collimated by a collimator lens 20 and then falls on a grating arrangement 22 which includes a pair of grating members 22A and 22B superimposed on each other. The grating directions of the grating members 22A and 22B intersect each other at a predetermined angle $\alpha$, as shown in Figure 2.

In the grating arrangement 22, the light beam L is divided into a centre beam and first and second side beams positioned at respective sides of the centre beam, and each of the first and second side beams is further divided into two beams with a relatively small space corresponding to the angle $\alpha$ therebetween. Therefore, five beams are derived from the grating arrangement 22. The side beam serves as a main light beam Lm, the divided first side beams serve as auxiliary light beams Lpa and Lpb, respectively, and the divided second side beams serve as auxiliary light beams Lna and Lnb, respectively. For the sake of simple illustration, the beams Lm, Lpa, Lpb, Lna and Lnb are shown with a single line in Figure 1. Each of the beams Lm, Lpa, Lpb, Lna and Lnb passes through a polarized beam splitter 24 without changing the direction of its optical axis, and then through a 1/4-wave plate 26 to the objective lens 12, and is focused by the objective lens 12 to impinge on the disc D.

As shown in Figure 3, the disc D has a centre hole 30 and an information recording area 32 around the centre hole 30. On the information recording area 32, a spiral guide groove 34 is previously formed to surround the centre hole 30, and a spiral record track is to be formed along the guide groove 34. The record track is to have a track pitch (the distance between the centres of two adjacent turns) of, for example, about 1.6 $\mu$m, and each turn of the record track is for convenience defined to be one track.

The beams Lm, Lpa, Lpb, Lna and Lnb incident on the disc D are modulated in intensity by the guide groove 34 or the record track, and are reflected to be a reflected main light beam Lm' and reflected auxiliary light beams Lpa', Lpb', Lna', and Lnb. Each of the reflected beams Lm', Lpa', Lpb', Lna' and Lnb' passes through the objective lens 12 and the 1/4-wave plate 26 to the beam splitter 24. Each of the reflected beams Lm', Lpa', Lpb', Lna' and Lnb is deflected at the beam splitter 24 so as to pass to the photosensor 14 through a receiving lens 28.

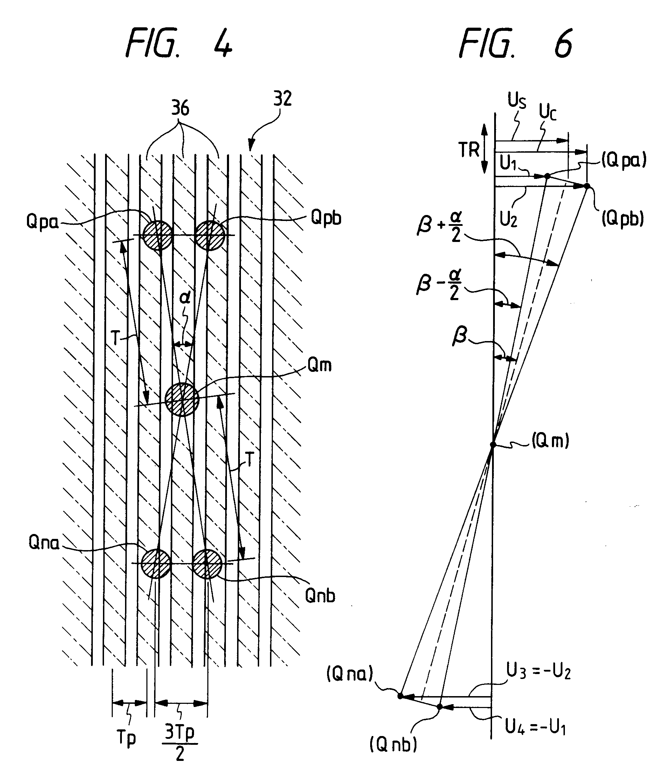

The objective lens 12, the beam splitter 24, the 1/4-wave plate 26 and the receiving lens 28 inclusive form an optical path forming device which is operative to cause the beams Lm, Lpa, Lpb, Lna and Lnb from the grating arrangement 22 to impinge on the disc D, and to guide the reflected beams Lm', Lpa', Lpb', Lna' and Lnb' from the disc D to the photosensor 14. The optical path forming device is adjusted to position the beams Lm, Lpa, Lpb, Lna and Lnb each focused by the objective lens 12 to impinge on the disc D in such a manner that, as shown in Figure 4, in the recording area 32 of the disc D, a main light beam spot Qm is formed by the main beam Lm on a record track 36, a group of auxiliary light beam spots Qpa and Qpb and another group of auxiliary light beams spots Qna and Qnb are formed by the pair of auxiliary beams Lpa and Lpb and the pair of auxiliary beams Lna and Lnb, respectively, to be disposed with the main beam spot Qm between. The auxiliary beam spots Qpa, Qpb, Qna and Qnb are respectively distant substantially the same distance, for example, a distance T from the main beam spot Qm, so that the main beam spot Qm and the auxiliary beam spots Qpa and Qpb are positioned respectively at apexes of an equilateral triangle with an apex angle of $\alpha$ between equilateral sides, the auxiliary beam spots Qpa and Qpb have a space therebetween in the radial direction of the disc D, which corresponds to N/2 times the track pitch Tp of the record track 36, for example, 3Tp/2, and the auxiliary beam spots Qna and Qnb have a space therebetween in the radial direction of the disc D, which corresponds to N/2 times the track pitch Tp, for example, 3Tp/2.

The photosensor 14 upon which each of the reflected beams Lm', Lpa', Lpn', Lna' and Lnb is incident has a first photodetecting element for detecting the reflected main beam Lm', a second photodetecting element for detecting both of the reflected auxiliary beams Lpa' and Lpb', and a third photodetecting element for detecting both of the reflected auxiliary beams Lna' and Lpa'. Detection output signals obtained from the first, second and third photodetecting elements of the photosensor 14 are supplied to a signal generating circuit 40 to produce a reproduced information signal Si, a focus error signal Sf and a tracking error signal St.

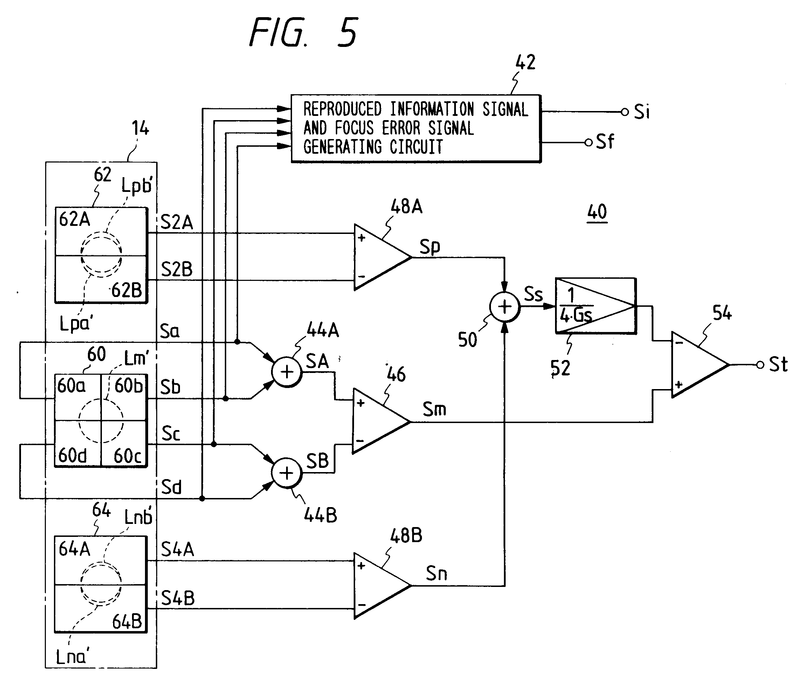

Figure 5 shows one example of configuration including the photosensor 14 and the signal generating circuit 40 in the embodiment of Figure 1.

Referring to Figure 5, the photosensor 14 comprises a photodetecting element 60 for detecting the reflected main light beam Lm' as the first photodetecting element, which is divided into four parts 60a, 60b, 60c, and 60d disposed close to one another, a photodetecting element 62 for detecting both of the reflected auxiliary beams Lpa' and Lpb' as the second photodetecting element, which is divided into two parts 62A and 62B disposed close to each other, and a photodetecting element 64 for detecting both of the reflected auxiliary beams Lna' and Lnb as the third photodetecting element, which is divided into two parts 64A and 64B disposed close to each other.

Detection output signals Sa, Sb, Sc and Sd obtained from the parts 60a, 60b, 60c and 60d of the photodetecting element 60, respectively, are supplied to a reproduced information signal and focus error signal generating circuit 42 forming part of the signal generating circuit 40. In the generating circuit 42, the reproduced information signal Si and the focus error signal Sf are separately produces based on the detection output signals Sa, Sb, Sc and Sd.

Further, in the signal generating circuit 40, the detection output signals Sa and Sb are added to each other in an adder 44A to produce an added signal SA (= Sa + Sb), and the detection output signals Sc and Sd are also added to each other in an adder 44B to produce an added signal SB(= Sc + Sd). The added signals SA and SB are substantially equivalent to detection output signals obtained from first and second detecting parts, respectively, as if the photodetecting element 60 were divided into the first detecting part which corresponds to the parts 60a thus 60b and the second detecting part which corresponds to the parts 60c thus 60d.

Then, the added signals SA and SB are supplied to a subtracter 46 to produce a difference signal Sm (= SA - SB) corresponding to a level difference between the added signals SA and SB.

Detection output signals S2A and S2B obtained from the parts 62A and 62B of the photodetecting element 62, respectively, are supplied to a subtracter 48A to produce a difference signal Sp (= S2A - S2B) corresponding to a level difference between the detection output signals S2A and S2B, and detection output signals S4A and S4B obtained from the parts 64A and 64B of the photodetecting element 64, respectively are supplied to a subtracter 48B to produce a difference Sn (= S4A - S4B) corresponding to a level difference between the detection output signals S4A and S4B. The difference signals Sp and Sn are supplied to an adder 50 to produce an added signal Ss (= Sp + Sn).

The difference signal Sm is directly supplied to one input terminal of a subtracter 54. The added signal Ss is supplied to a level controller 52 to be subjected therein to level adjustment with a gain of $1/(4 \cdot Gs)$ and is then supplied to the other input terminal of the subtracter 54. The gain $1/(4 \cdot Gs)$ is set in response to a ratio in intensity Gs of each of the auxiliary light beams Lpa, Lpb, Lna and Lnb to the main light beam Lm. From the subtracter 54, a difference signal $(= Sm - Ss/(4 \cdot Gs))$ which corresponds to a level difference between the difference signal Sm from the subtracter 46 and the added signal Ss having been adjusted in level with the gain of $1/(4 \cdot Gs)$ is obtained, to be the tracking error signal St.

Where the tracking error signal St is produced as described above, when the disposition of the beam spots Qm, Qpa, Qpb, Qna and Qnb on the information recording area 32, in which a line passing through the centre point between the auxiliary beam spots Qpa and Qpb, the centre of the main beam spot Qm and the centre point between the auxiliary beam spot Qm and Qnb coincides with a tangential direction of the record track 36, is changed into another disposition of the beam spots Qm, Qpa, Qpb, Qna and Qnb on the information recording area 32, in which, as shown in Figure 6, a line passing through the centre point between the auxiliary beam spots Qpa and Qpb, the centre of the main beam spot Qm and the centre point between the auxiliary beam spots Qna and Qnb, which is shown with a broken line in Figure 6, intersects the tangential direction of the record track 36, which is shown with a line TR in Figure 6, at an angle of β, an aligning direction of the auxiliary beam spot Qpa, the main beam spot Qm and the auxiliary beam spot Qnb intersects the tangential direction of the record track 36 at an angle of $\beta - \alpha/2$, and an aligning direction of the auxiliary beam spot Qpb, the main beam spot Qm and the auxiliary beam spot Qna intersects the tangential direction of the record track 36 at an angle of $\beta + \alpha/2$.

In such a case, if $I_0$ stands for the intensity of the main beam Lm, $I_1$ stands for the intensity of each of the auxiliary beams Lpa, Lpb, Lna and Lnb, U stands for the displacement of the main beam Lm from the centre of the record track 36 in the radial direction of the disc D, Uc, Us, $U_1$, $U_2$, $U_3$ and $U_4$ stand for the distances from the line which extends to pass through the centre of the main beam spot Qm along the tangential direction of the record track 36 shown with the line TR, which are indicated by arrows in Figure 6, respectively, the following equations are satisfied:

$$U_1 = Us - Uc$$
$$U_2 = Us + Uc$$
$$U_3 = -Us - Uc$$
$$U_4 = -Us + Uc$$
$$Us = L \cdot \cos(\alpha/2) \cdot \sin\beta$$
$$Uc = 3Tp/4 \cdot \cos\beta$$
$$Sm = SA - SB$$
$$= I_0\{a \cdot \sin(2\pi \cdot U/Tp) + b\}$$

$$Sp = S2A - S2B$$
$$= I_1[\underline{a}\cdot\sin\{2\pi(U + U_1)/Tp\} + \underline{b}]$$
$$+ I_1[\underline{a}\cdot\sin[2\pi(U + U_2)/Tp\} + \underline{b}]$$
$$= I_1[\underline{a}\cdot\sin\{2\pi(U + Us - Uc)/Tp\} + \underline{b}]$$
$$+ I_1[\underline{a}\cdot\sin\{2\pi(U + U_2 + Uc)/Tp\} + \underline{b}]$$
$$Sn = S4A - S4B$$
$$= I_1[\underline{a}\cdot\sin\{2\pi(U + U_3)/Tp\} + \underline{b}]$$
$$+ I_1[\underline{a}\cdot\sin\{2\pi(U + U_4)/Tp\} + \underline{b}]$$
$$= I_1[\underline{a}\cdot\sin\{2\pi(U - Us - Uc)/Tp\} + \underline{b}]$$
$$+ I_1[\underline{a}\cdot\sin\{2\pi(U - U_2 + Uc)/Tp\} + \underline{b}]$$

where $\underline{a}$ stands for amplitude and $\underline{b}$ stands for a DC offset component.

Since the equation : $Gs = I_1/I_0$ is satisfied, the following equations are further satisfied:

$$St = Sm - Ss/(4\cdot Gs)$$
$$= Sm - (Sp + Sp)/(4\cdot Gs)$$
$$= (1 - Ks\cdot Kc)I_0\cdot\underline{a}\cdot\sin(2\pi\cdot U/Tp)$$

Where
$$Ks = \cos(2\pi\cdot Us/Tp)$$
$$Kc = \cos(2\pi\cdot Uc/Tp)$$

Accordingly, the tracking error signal St obtained from the subtracter 54 does not include the DC offset component, and is prevented from having phase deviations.

The tracking error signal St contains a function of the angle of $\beta$ : $(1 - Ks\cdot Kc)$, and therefore it is theoretically the case that the amplitude of the tracking error signal St varies in response to variations in the angle of $\beta$. However, the angle $\beta$ is usually smaller than 16 degrees, and the value of $(1 - Ks\cdot Kc)$ is about 0.005, and this results in the value of $(1 - Ks\cdot Kc)$ being negligible in practice, and so level variations in the tracking error signal St are suppressed.

As described above, in the case where each of the aligning direction of the auxiliary beam spot Qpa, the main beam spot and the auxiliary beam spot Qnb, and the aligning direction of the auxiliary beam spot Qpb, the main beam spot Qm and the auxiliary beam spot Qna is varied in relation to the tangential direction of the record track 36 with the movement of the optical unit, the displacements of each of the auxiliary beam spots Qpa, Qpb, Qna and Qnb to the record track 36 caused by the variations in each of the aligning directions as aforementioned are prevented from exerting a deleterious effect on the tracking error signal St, and therefore level variations therein are suppressed irrespective of the tracking condition of the main beam Lm in the information recording area 32.

Although the reflected beams Lm', Lpa, Lpb, Lna and Lnb are used for producing the tracking error signal St in the above embodiment, it is also possible to have such an arrangement that the reflected main beam Lm' and one of the group of reflected auxiliary beams Lpa' and Lpb and the group of reflected auxiliary beams Lna' and Lnb' are used for producing the tracking error signal St. In such a case, in the signal generating circuit 40, the adder 50 is not provided and the difference signal Sp obtained from the subtracter 48A or the difference signal Sn obtained from the subtracter 48B is subjected to the level adjustment with the gain of $1/(2\cdot Gs)$ in the level controller 52, and then supplied to the other input terminal of the subtracter 54.

Moreover, although the optical unit and the signal generating circuit of the above embodiment forms an information reproducing system applied to, for example, an optical disc player, it is to be understood that the present invention can be also applied to an optical unit and a signal generating circuit block which constitute an information recording system applied to, for example, an optical disc player, in which a main light beam and a plurality of auxiliary light beams are caused to impinge on an optical disc-shaped record medium for recording thereon information signals and, after reflection are used for producing a focus error signal and a tracking error signal.

## Claims

1. An optical recording and/or reproducing apparatus comprising:

   light beam generating means (10) for producing a main light beam and at least two auxiliary light beams;

   photosensing means (14) comprising a first photodetecting element (60) divided into two parts and a second photodetecting element (62) divided into two parts;

   optical path forming means (12, 24, 26, 28) for causing the main light beam and two auxiliary light beams to impinge upon an optical disc-shaped record medium (D) and for guiding the main light beam from the record medium (D) to said first photodetecting element (60) and both of two auxiliary light means emanating from the record medium (D) to project substantially coincident on said second photodetecting element (62), said optical path forming means (12, 24, 26, 28) being arranged to position the main light beam and two auxiliary light beams in such a manner that light beam spots formed on the record medium (D) by two auxiliary light beams are substantially aligned in a radial direction of the record medium (D) and are respectively distant substantially the same distance from a light beam spot formed on the record medium (D) by the main light beam with a space therebetween in the radial direction of the record medium (D), which corresponds to N/2 (N is a positive integer) times a track pitch on the record medium (D); and

   a signal generating circuit (40) operative to obtain a first difference output corresponding to a difference in level between detection outputs derived respectively from two parts of said first photodetecting element (60) and a second difference output corresponding to a difference in level between detection outputs derived respectively from two parts of said second photodetecting element (62), and to produce a tracking error signal based on a difference in level between one of said first and second difference outputs and the other of said first and second difference outputs, the other of said first and second difference outputs having been subjected to level adjustment for compensating a difference in intensity between the main light beam and each of two auxiliary light beams.

2. Apparatus according to claim 1 wherein said signal generating circuit (40) includes level control means (52) for providing said level adjustment to the other of said first and second difference outputs.

3. Apparatus according to claim 1 wherein said light beam generating means (10) is operative to produce the main light beam and first and second pair of auxiliary light beams, and said optical path forming means (12, 24, 26, 28) is operative to cause the main light beam and the first and second pair of auxiliary light beams to impinge on the record medium (D) in such a manner that, on the record medium (D), centre point between a pair of light beam spots formed by the first pair of auxiliary light beams, respectively, the centre of a light beam spot formed by the main light beam and the centre point between a pair of light beam spots formed by the second pair of auxiliary light beam spots, respectively, are aligned.

4. Apparatus according to claim 3 wherein said light beam generating means (10) comprises a light beam source (10) and a grating arrangement (22) including a pair of grating members (22A, 22B) superposed on each other.

5. Apparatus according to claim 4 wherein said grating members (22A, 22B) have respective grating directions intersecting each other at a predetermined angle.

6. Apparatus according to claim 3 wherein said photosensing means (14) further comprises a third photodetecting element (64) divided into two parts (64A, 64B), said optical path forming means is operative to guide main light beam from the record medium (D) to said first photodetecting element (60), both the first pair of auxiliary light beams from the record medium (D) to said second photodetecting element (62) and both the second pair of auxiliary light beams from the record medium (D) to said third photodetecting element (64), and said signal generating circuit (40) is operative to obtain further a third difference output corresponding to a difference in level between detection outputs derived respectively from two parts of said third photodetecting element (64) and then an added output obtained by adding said second difference output to said third difference output, and to produce the tracking error signal based on a difference in level between one of said first difference output and said added output and the other of said first difference output and said added output having been subjected to level adjustment for compensating a difference in intensity between the main light beam and each of the first and second pair of auxiliary light beams.

7. Apparatus according to claim 6 wherein said signal generating circuit (40) includes level control means (52) for providing said level adjustment to the other of said first difference output and said added output.

**Patentansprüche**

1. Optisches Aufnahme- und/oder Wiedergabegerät, das umfaßt:

ein Lichtstrahlerzeugungsmittel (10) zum Erzeugen eines Hauptlichtstrahls und zumindest zweier Hilfslichtstrahlen,

einen Photosensor (14), der ein erstes Photosensorelement (60), das in zwei Teile unterteilt ist, und ein zweites Photosensorelement (62), das in zwei Teile unterteilt ist, enthält,

Mittel (12, 24, 26, 28) zum Bilden eines optischen Weges zum Bewirken, daß der Hauptlichtstrahl und zwei Hilfslichtstrahlen auf ein plattenförmiges optisches Aufzeichnungsmedium (D) treffen, und zum Leiten des Hauptlichtstrahls von dem Aufzeichnungsmedium (D) auf das erste Photosensorelement (60) und beider der zwei Hilfslichtstrahlen, die von dem Aufzeichnungsmedium (D) abgestrahlt werden, um sie im wesentlichen koinzident auf das zweite Photosensorelement (62) zu projizieren, wobei die Mittel (12, 24, 26, 28) zum Bilden des optischen Wegs derart angeordnet sind, daß sie den Hauptlichtstrahl und die zwei Hilfslichtstrahlen derart positionieren, daß Lichtstrahlpunkte, die auf dem Aufzeichnungsmedium (D) durch zwei Hilfslichtstrahlen gebildet werden, im wesentlichen in einer radialen Richtung des Aufzeichnungsmediums (D) ausgerichtet sind und jeweils im wesentlichen einen Abstand mit der gleichen Distanz von einem Lichtstrahlpunkt haben, der auf dem Aufzeichnungsmedium (D) durch den Hauptlichtstrahl mit einem Abstand dazwischen in der radialen Richtung des Aufzeichnungsmediums (D) gebildet ist, welcher dem N/2-fachen (N ist eine positive ganze Zahl) einer Spurschrittweite auf dem Aufzeichnungsmedium (D) entspricht, und eine Signalerzeugungsschaltung (40), die betreibbar ist, um ein erstes Differenzausgangssignal entsprechend einer Differenz im Pegel zwischen Erfassungsausgangssignalen, die jeweils von zwei Teilen des ersten Photosensorelements (60) gewonnen sind, und ein zweites Differenzausgangssignal entsprechend einer Differenz im Pegel zwischen Erfassungsausgangssignalen, die jeweils von zwei Teilen des zweiten Photosensorelements (62) gewonnen sind, zu gewinnen und um ein Spurverfolgungsfehlersignal auf der Grundlage einer Differenz im Pegel zwischen dem einem der ersten und zweiten Differenzausgangssignale und dem anderen der ersten und zweiten Differenzausgangssignale zu erzeugen, wobei das andere der ersten und zweiten Differenzausgangssignale einer Pegeleinstellungsoperation zum Kompensieren einer Differenz in der Helligkeit zwischen dem Hauptlichtstrahl und jedem der zwei Hilfslichtstrahlen unterzogen worden ist.

2. Gerät nach Anspruch 1, bei dem die Signalerzeugungsschaltung (40) ein Pegelregelungsmittel (52) zum Bewirken der Pegeleinstellung für das andere der ersten und zweiten Differenzausgangssignale enthält.

3. Gerät nach Anspruch 1, bei dem das Lichtstrahlerzeugungsmittel (10) betreibbar ist, um den Hauptlichtstrahl und ein erstes und ein zweites Paar von Hilfslichtstrahlen zu erzeugen, und bei dem die Mittel (12, 24, 26, 28) zum Bilden des optischen Weges wirksam sind, um zu veranlassen, daß der Hauptlichtstrahl und das erste und das zweite Paar von Hilfslichtstrahlen derart auf das Aufzeichnungsmedium (D) treffen, daß auf dem Aufzeichnungsmedium (D) ein mittlerer Punkt zwischen Punkten eines Paares von Lichtstrahlpunkten, die jeweils durch das erste Paar von Hilfslichtstrahlen gebildet sind, und der Mitte eines Lichtstrahlpunkts, der durch den Hauptlichtstrahl gebildet ist, und der mittlere Punkt zwischen Punkten eines Paares von Lichtstrahlpunkten, die jeweils durch das zweite Paar von Hilfslichtstrahlen gebildet sind, ausgerichtet sind.

4. Gerät nach Anspruch 3, bei dem das Lichtstrahlerzeugungs mittel (10) aus einer Lichtstrahlquelle (10) und einer Beugungsanordnung (22) besteht, die ein Paar von Beugungselementen (22A, 22B) enthält, welche einander überlagert sind.

5. Gerät nach Anspruch 4, bei dem die Beugungselemente (22A, 22B) jeweilige Beugungsrichtungen haben, die sich unter einem vorbestimmten Winkel durchschneiden.

6. Gerät nach Anspruch 3, bei dem der Photosensor (14) ferner ein drittes Photosensorelement (64) umfaßt, das in zwei Teile (64A, 64B) unterteilt ist, bei dem die Mittel zum Bilden des optischen Weges wirksam sind, um den Hauptlichtstrahl von dem Aufzeichnungsmedium (D) zu dem ersten Photosensorelement (60) zu leiten, beide Strahlen des ersten Paares von Hilfslichtstrahlen von dem Aufzeichnungsmedium (D) zu dem zweiten Photosensorelement (62) zu leiten und beide Strahlen des zweiten Paares von Hilfslichtstrahlen von dem Aufzeichnungsmedium (D) zu dem dritten Photosensorelement (64) zu leiten, und bei dem die Signalerzeugungsschaltung (40) betreibbar ist, um ferner ein drittes Differenzausgangssignal entsprechend einer Differenz im Pegel zwischen Erfassungsausgangssignalen, die jeweils von zwei Teilen des dritten Photosensorelements (64) gewonnen sind, und dann ein addiertes Ausgangssignal, das durch Addieren des zweiten Differenzausgangssignals zu dem dritten Differenzausgangssignal erzeugt ist, zu gewinnen, und das Spurverfolgungsfehlersignal auf der Grundlage einer Differenz im Pegel zwischen dem einen Signal von erstem Differenzausgangssignal und addiertem Ausgangssignal und dem anderen von erstem Differenzausgangssignals und addiertem Ausgangsignal, welches der Pegeleinstellungsoperation zum Kompensieren einer Differenz in der Helligkeit zwischen dem Hauptlichtstrahl und jedem der ersten und zweiten Paare von Hilfslichtstrahlen unterzogen worden ist, zu erzeugen.

7. Gerät nach Anspruch 6, bei dem die Signalerzeugungsschaltung (40) ein Pegelregelungsmittel (52) zum Bewirken der Pegeleinstellung für das andere von erstem Differenzausgangssignals und addiertem Ausgangsignal enthält.

**Revendications**

1. Appareil d'enregistrement et/ou de reproduction optique comprenant :
   un moyen générateur de faisceaux lumineux (10) pour produire un faisceau lumineux principal et au moins deux faisceaux lumineux auxiliaires ;
   un moyen de photodétection (14) comprenant un premier élément de photodétection (60) divisé en deux parties et un second élément de photodétection (62) divisé en deux parties ;

un moyen de formation de trajet optique (12, 24, 26, 28) pour faire en sorte que le faisceau lumineux principal et les deux faisceaux lumineux auxiliaires soient projetés sur un support d'enregistrement optique en forme de disque (D) et pour guider le faisceau lumineux principal provenant du support d'enregistrement (D) vers ledit premier élément de photodétection (60) et les deux faisceaux lumineux auxiliaires émanant du support d'enregistrement (D) pour qu'ils se projettent sensiblement en coïncidence sur ledit second élément de photodétection (62), ledit moyen de formation de trajet optique (12, 24, 26, 28) étant conçu pour placer le faisceau lumineux principal et les deux faisceaux lumineux auxiliaires de telle manière que des points lumineux de faisceau formés sur le support d'enregistrement (D) par les deux faisceaux lumineux auxiliaires soient sensiblement alignés dans une direction radiale du support d'enregistrement (D) et soient, respectivement, sensiblement écartés de la même distance par rapport à un point lumineux de faisceau formé sur le support d'enregistrement (D) par le faisceau lumineux principal, avec, entre eux, un espace dans la direction radiale du support d'enregistrement (D) qui corresponde à N/2 (N étant un nombre entier positif) fois un pas de piste sur le support d'enregistrement (D) ; et

un circuit générateur de signaux (40) servant à obtenir une première sortie différence correspondant à une différence de niveau entre des sorties de détection obtenues respectivement des deux parties dudit premier élément de photodétection (60), et une seconde sortie différence correspondant à une différence de niveau entre des sorties de détection obtenues, respectivement, des deux parties dudit second élément de photodétection (62), et à produire un signal d'erreur de suivi de piste basé sur la différence de niveau entre l'une desdites première et seconde sorties différences et l'autre desdites première et seconde sorties différences, l'autre desdites première et seconde sorties différences ayant été soumise à un réglage de niveau pour compenser une différence d'intensité entre le faisceau lumineux principal et chacun des deux faisceaux lumineux auxiliaires.

2. Appareil selon la revendication 1, dans lequel ledit circuit générateur de signaux (40) comprend un moyen de commande de niveau (52) pour fournir ledit réglage de niveau à l'autre desdites première et seconde sorties différences.

3. Appareil selon la revendication 1, dans lequel ledit moyen générateur de faisceaux lumineux (10) sert à produire le faisceau lumineux principal et des première et seconde paires de faisceaux lumineux auxiliaires, et dans lequel ledit moyen de formation de trajet optique (12, 24, 26, 28) sert à faire que le faisceau lumineux principal et les première et seconde paires de faisceaux lumineux auxiliaires soient projetés, respectivement, sur le support d'enregistrement (D) d'une façon telle que, sur le support d'enregistrement (D), le point central entre une paire de points lumineux de faisceau formés par la première paire de faisceaux lumineux auxiliaires, le centre d'un point lumineux de faisceau formé par le faisceau lumineux principal et le point central entre une paire de points lumineux de faisceau formé par la seconde paire de points lumineux de faisceau auxiliaire soient, respectivement, alignés.

4. Appareil selon la revendication 3, dans lequel ledit moyen générateur de faisceaux lumineux (10) comprend une source de faisceaux lumineux (10) et un agencement de grilles de diffraction (22) incluant une paire d'éléments grilles de diffraction (22A, 22B) superposés l'un sur l'autre.

5. Appareil selon la revendication 4, dans lequel lesdits éléments grilles de diffraction (22A, 22B) ont des directions de grille de diffraction respectives qui se coupent l'une l'autre suivant un angle prédéterminé.

6. Appareil selon la revendication 3, dans lequel ledit moyen de photodétection (14) comprend en outre un troisième élément de photodétection (64) divisé en deux parties (64A, 64B), dans lequel ledit moyen formant trajet optique sert à guider le faisceau lumineux principal depuis le support d'enregistrement (D) jusqu'audit premier élément de photodétection (60), la première paire de faisceaux lumineux auxiliaires provenant du support d'enregistrement (D) jusqu'audit deuxième élément de photodétection (62) et la seconde paire de faisceaux lumineux auxiliaires provenant du support d'enregistrement (D) jusqu'au troisième élément de photodétection (64) ; et dans lequel ledit circuit générateur de signaux (40) sert à obtenir en outre une troisième sortie différence correspondant à la différence de niveau entre des sorties de détection obtenues, respectivement, des deux parties dudit troisième élément de photodétection (64) et ensuite une sortie additionnée obtenue en additionnant ladite deuxième sortie différence à ladite troisième sortie différence, et à produire le signal d'erreur de suivi de piste en se basant sur une différence de niveau entre l'une de ladite première sortie différence et de ladite sortie additionnée et l'autre de ladite première sortie différence et de ladite sortie additionnée qui a été soumise à un réglage de niveau pour compenser la différence d'intensité entre le faisceau lumineux principal et chacune de la première et seconde paires de faisceaux lumineux auxiliaires.

7. Appareil selon la revendication 6, dans lequel ledit circuit générateur de signaux (40) comprend un moyen de commande de niveau (52) pour fournir ledit réglage de niveau à l'autre de ladite première sortie différence et de ladite sortie additionnée.

# FIG. 1

# FIG. 2

# FIG. 3

# FIG. 4

# FIG. 6

FIG. 5

REPRODUCED INFORMATION SIGNAL AND FOCUS ERROR SIGNAL GENERATING CIRCUIT

EP 0 409 469 B1